# EUROPEAN PATENT SPECIFICATION

(11) **EP 0 665 714 B1**
(45) Date of publication and mention of the grant of the patent: **30.12.1998**
(21) Application number: 93922550.4
(22) Date of filing: 12.10.1993
(51) Int. Cl.: A01N 25/14

(54) **GRANULAR WATER SOLUBLE OR HYGROSCOPIC AGRICULTURAL FORMULATIONS AND METHODS OF MAKING THEM**
GRANULÄRE WASSERLÖSLICHE ODER HYGROSKOPISCHE LANDWIRTSCHAFTLICHE FORMULIERUNGEN UND VERFAHREN ZU IHRER HERSTELLUNG
FORMULATIONS POUR L'AGRICULTURE, GRANULAIRES, HYDROSOLUBLES OU HYGROSCOPIQUES, ET PROCEDES POUR LEUR FABRICATION

(30) Priority: 30.10.1992 US 968723; 30.10.1992 US 968926
(43) Date of publication of application: 09.08.1995
(73) Proprietor: BASF CORPORATION, Parsippany, New Jersey 07054 (US)
(72) Inventor: FERSCH, Ken, Apex, NC 27502 (US); BYRNE, Thomas, Chapel Hill, NC 27516 (US)
(74) Representative: Langfinger, Klaus-Dieter, Dr.
(86) International application number: EP9302792
(87) International publication number: WO9409627

(56) References cited:
- WO-A-89/00079
- GB-A- 2 238 960

## Description

The present invention relates to dispersible granular formulations of salts of water soluble or hygroscopic pesticidal compounds and to methods for making these granular formulations.

Granular formulations of pesticides tend to be safer in application and environmentally, as they are more easily handled by the farmer. Dry flowable formulations using silica and oil soluble pesticides are known. These formulations are generally adsorbed onto a solid carrier, milled and then granulated. However, this technique is generally unacceptable when used with water soluble or hygroscopic agricultural products.

GB-A 2 238 960 discloses water dispersible granules of, i.a. hygroscopic pesticides, which contain the active ingredient on a carrier. WO-A 89 000 79 discloses similar compositions. Both references do not, however, suggest to use the filler/binder of the instant invention.

The plant growth regulator, known trivially as mepiquat chloride, is a water soluble pesticidal salt and is generally used to control various aspects of cotton boll growth. See, for example, Khafaga, Angew. Botanik 57, 257-265 (1983); Sawan et al., J. Agronomy & Plant Science 154, 120-128 (1985); U.S. Patents 3,905,798 and 4,447,255.

For example, mepiquat chloride has a high water solubility - in general, more than about 600 g/l. The substance is very hygroscopic and readily absorbs moisture from humid air, so that the dry powder can turn to liquid when exposed to ambient humid air. Additionally, the solid material cakes rapidly in storage and sticks to container surfaces, even with initial water contents of less than 0.5%. These properties make it extremely difficult to granulate and disperse mepiquat chloride, for example.

There is a need for methods of making dispersible, granular formulations for water soluble or hygroscopic pesticidal compounds which maintain the biological activity of the water soluble or hygroscopic pesticidal compound and eliminate milling.

Hence, it was an object of the present invention to provide an agriculturally acceptable water soluble or hygroscopic pesticidal formulation in a dispersible granular form.

Accordingly, dispersible granular formulations of water soluble or hygroscopic pesticidal compounds have been discovered. Also discovered was a method of making these dispersible granular formulations of salts of water soluble or hygroscopic pesticidal compounds.

The method of the present invention uses highly aborbent solids to form a stable, dry product without the need for a milling step to attain an effective particle size of the dispersed product.

The method involves adsorbing the pesticide onto a highly absorptive carrier. Thereafter, the adsorbed pesticide/carrier composition is granulated by granulating means well known in the art. The granulated pesticide/carrier composition is then dried and the composition is sized to remove any oversize and fine particles.

The particularly preferred pesticides of the present invention are salts of water soluble or hygroscopic pesticides. These preferred pesticides include, for example, plant growth regulators, including the group consisting of 1,1-dimethyl-3,4-dehydropiperidinium bromide, 4-chloro-1,1-dimethylpiperidinium bromide, 1,1-dimethylhexahydropyridazinium bromide, and 1,1-dimethylpiperidinium chloride; and herbicides such as sodium bentazon and sodium acifluorfen.

As used herein, the term "agriculturally acceptable" includes agricultural, industrial and residential use.

As used herein, the terms "pesticide(s)" or "pesticidal" include plant growth regulators, insecticides, acaricides, nematocides, fungicides, miticides, herbicides, algicides, bactericides and molluscicides.

As used herein, "plant growth regulator(s)" (hereinafter abbreviated as "PGR") or "regulation" includes the following plant responses: inhibition of cell elongation, for example reduction in stem height and internodal distance, strenghthening of the stem wall, thus increasing the resistance to lodging; compact growth in ornamentals for the economic production of improved quality plants; promotion of better fruiting; increasing the number of ovaries with a view to stepping up yield; promotion of senescence of the formation of tissue enabling fruit to absciss; defoliation of nursery and ornamental bushes and trees for mail-order business in the fall; defoliation of trees to interrupt parasitic chains of infection; hastening of ripening, with a view to programming the harvest by reducing the harvest to one to two pickings and interrupting the food-chain for injurious insects.

As used herein, the formulations of the present invention may be used to form both package and tank mix compositions.

The present invention comprises salts of water soluble or hygroscopic pesticidal compounds comprising an agriculturally and plant growth regulating effective amount of a salt of a hygroscopic pesticidal compound, and more preferably, of a salt of a plant growth regulator (PGR) or a salt of a herbicide.

Specific preferred examples include N,N-dimethyl-piperidinium salt, bentazon salt or sodium acifluorfen as a dry flowable highly concentrated powder.

Preferred PGRs include salts of the formula: 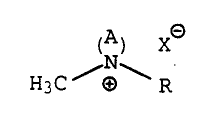 where R is methyl or ethyl; X is the anion of an inorganic or organic, but not phytotoxic acid, preferably bromide or chloride, and A is a chain of 4 or 5 methylene groups, which chain may be substituted by chloro, bromo, methyl, chloromethyl, bromomethyl, hydroxymethyl, and methylene, or which chain containing one or two double bonds, or A is the chain -(CH₂)ₙ-NH-, where n is 3 or 4, disclosed in U.S. 3,905,798.

Preferred specific examples of PGRs include 1,1-dimethyl-3,4-dehydro-piperidinium bromide, 4-chloro-1,1-dimethylpiperidinium bromide, 1,1-dimethyl-hexahydropyridazinium bromide and 1,1-dimethylpiperidinium chloride. The most preferred plant growth regulator is 1,1-dimethylpiperidinium chloride (also known as N,N-dimethylpiperidinium chloride, mepiquat chloride or as PIX®).

Preferred herbicides include, for example, the sodium salt of bentazon (BASAGAN®), the sodium salt of acifluorfen (BLAZER®), the sodium salt of sethoxydim, the dimethylamine salts of 2,4-D, difenzoquat methyl sulfate (AVENGE®) and mixtures thereof.

The granules of the present invention may be prepared by adsorbing the active ingredients onto highly absorptive solid carriers. Thereafter, optional ingredients or additives may be added. The wet powder is then granulated by means well known in the art, including, but not limited to, extrusion, pan granulation and Schugi agglomeration.

The process of the instant invention eliminates the need for a milling step. The elimination of this step reduces the cost and time of production, and avoids worker exposure to respirable dust associated with most commercial milling processes.

The granule size is determined by the end application; however, the granule diameter is preferably about 0.7 mm to about 1.5 mm for extrusion and about -8 to about +30 mesh for other granulation techniques.

The wet granules are then dried by means well known in the art, including, but not limited to, oven drying and fluid bed drying. Drying generally takes about 4 to about 60 minutes.

After the drying step is completed the granules are then sized to eliminate fines, dust and oversized particles. The final granules particle size is preferred to be a mixture of about < 1.0 wt% +8 mesh, < 3.0 wt% -30 mesh and < 0.2 wt% -100 mesh. The preferred median dispersed particle diameter size is about < 40 micron after 5 minutes with dissolution without sonics. The loose bulk density is about 0.34 to 0.50 g/ml. A packed bulk density is preferred to be about 0.36 to 0.54 g/ml.

When the final granules are suspended, they are preferred to have a solids suspendability content of greater than about 50%, by standard test means of the art. When the granules are suspended, the amount of active pesticide present should be greater than about 90%. The final granule has a preferred nominal diameter of about 1.5 mm. It is preferred to have minimal extraneous materials or contaminants in the product.

The absorptive solid carrier is synthetic calcium silicate. The synthetic calcium silicate provides significant absorption of the active onto the carrier with minimal agglomeration. This combination has superior tolerance of the varying shear intensity during agitation in the end use tank.

Mixtures of synthetic calcium silicates with other solid carriers, for example, mineral earths such as silicic acid, silica gels, talc, kaolin, Attaclay, limestone, lime, chalk, bole, loess, clay, dolomite, diatomaceous earth, calcium sulfate, magnesium sulfate, magnesium oxide, can also be used.

In general, the formulations of the present invention contains from about 0.1 to about 95%, and preferably from about 5 to about 50% by weight of active ingredient.

The ratio of carrier to active (pesticide plus granulation water) is about 0.1 to about 2.0, and more preferably about 0.2 to about 1.0 percent by weight.

While the ratios of the concentrations of the various components of the present invention hereinafter suggested, those skilled in the art will recognize that minor variations may be necessary to accommmodate particular characteristics of acceptable actives which may be employed in this invention.

The dispersing agents iii) may be incorporated into the granule in the same manner as the active. Suitable examples of dispersing agents include nonionic or anionic surfactants.

Specific suitable examples include condensed sulfonate sodium salt (available commercially as Morwet D-425 from Vitco, Inc., Houston, Texas, lignosulfonic acids such as Reax 88A or lignosulfonic acid formulations with wetting agents such as Reax 45DTC (both available commercially from Westavco, Charleston Heights, South Carolina).

The most preferred dispersing agents are lignosulfonic acid formulations or condensed sulfonate sodium salts. It is most preferred to use a mixture of either lignosulfonic acid formulations or condensed sulfonate sodium salts with polyvinylpyrrolidone (PVP). The dispersing agent may be present in the present invention in an amount up to about 15.0 wt% and more preferably from about 0.5 to about 15.0 wt%. The PVP dispersing agent is preferably present in an amount of 0.0 to 5.0 wt%, and more preferably in an amount of about 0.2 to about 2.0 wt%.

A wetting agent may also be used in the present invention. Suitable examples include nonionic and anionic surfactants, and more specifically, mixtures of alkyl carboxylates and sulfonated alkyl naphthalene, and their sodium salts available commercially as Morwet EFW from Vitco, Inc., Houston, Texas. A wetting agent is preferably present in an amount of about 0.0 to 10.0 wt%, and more preferably about 0.5 to about 10.0 wt%.

In addition, absorptive filler/binders are incorporated into the composition of the present invention.

The filler/binder is delaminated kaolin (available commercially as Englehard ASP-NC from Englehard Chemical Corp.). Filler/binders may be present in the present invention in an amount up to about 60 wt%, and more preferably, from about 1.0 to about 40 wt%.

In addition to the above-described components, the compositions of the present invention may also include other ingredients or adjuvants commonly employed in the art.

Examples of such ingredients include drift control agents, defoaming agents, preservatives, surfactants, fertilizers, phytotoxicants, adherents, trace elements, synergists, antidotes, mixtures thereof and other such adjuvants well known in the pesticide art.

However, it is preferred to employ the compositions of the present invention along with sequential treatments with these other components for optimal effect.

The formulations of the present invention have good storage stability.

The compositions of the present invention may be applied to above ground portions of plants. The application of liquid and particulate solid compositions to above ground portions of plants may be carried out by conventional methods, for example, boom and hand application, including sprayers or dusters. The compositions may be applied aerially as a spray, if desired. The mixtures of the present invention are preferably used in the form of aqueous dispersions. The mixtures are applied in a conventional manner, for example, by spraying, atomizing, watering or disinfecting seed.

The forms of application depend entirely on the purpose for which the compositions are being used. At all events, they should ensure a fine distribution of the active ingredients in the composition.

The above plant growth regulator formulation may then be dispersed in water and sprayed onto plants according to the method of the present invention.

The action of the compositions of the present invention are optimal even at low application rates. For a given composition, the skilled artisan will readily arrive by routine experimentation at a composition having the optimum ratio of the ingredients.

### Examples

### Example 1

The following components were used:

| Raw Material | at 25°C | Supplier | w/w |
|---|---|---|---|
| Mepiquat chloride *) | Liquid | BASF Corp. | about 350 g/kg |
| Microcel E | Powder | Manville Corp. | 293 g/kg |
| Morwet EFW | Powder | Witco Corp. | 30 g/kg |
| Morwet D-425 | Powder | Witco Corp. | 50 g/kg |
| Agrimer ATF | Powder | ISP | 10 g/kg |
| Barden Fine Clay | Powder | J. M. Huber Corp. | 250 g/kg |
| Residual Water | Liquid | Tap | 15-20 g/kg |

| | | | |
|---|---|---|---|
| *) technical grade (yellow) | | | |

At 1.5 wt% water in the product described above, the amount of active ingedient (ai) in the formulation is 35.2 wt%. If the product moisture reaches 2 wt%, the formulation will then contain 35.0 wt% of ai.

Synthetic calcium silicate (Microcel E, a crystalline silica free (CSF) form of diatomaceous earth) was used as a carrier. A mixture of alkyl carboxylate and sulfonated alkyl naphthaline, sodium salt (Morwet EFW) was used as a wetting agent. A binder and dispersing agent of condensed naphthalene sulfonate sodium salt (Morwet D-425) was also used.

### Feed preparation - batch

The batch size was computed to give a full charge to the blender to be used. Weighed amounts of each solid raw material were charged to the blender. A stainless steel ribbon blender, paddle mixer, kneader, or other suitable blender was used for homogenizing the materials. After liquids (active ingredient and granulation water) were added to the batch, it contained about 34% water and the bulk density of the extruder feed went up to around 0.55 g/ml. The blender was equipped with spray nozzles for the active ingredient and for water and has appropriate air extraction. Blend time for a properly filled ribbon or paddle mixer was about 20 minutes. The Micro-Cel® E and then the clay were added to the blender.

Weighed amounts of mepiquat chloride technical and water were added to a polyethylene or stainless steel liquid mixing vessel with agitator, and stirred for 5 minutes. This is sprayed onto the premixed solids. Blend time after all the liquid is added was about 5 to 10 minutes.

### Feed preparation - semi-continuous

Solid raw materials are blended per the feed preparation described above. A solution of mepiquat chloride and water were prepared using about half of the calculated, theoretical amount of water. This mixture was stirred for about 5 minutes. The blended solids were metered to a continuous mixer with a gravimetric feeder.

For this rate of solids, the liquids rate was calculated to give a dry product of about 35 wt% mepiquat chloride. A positive displacement metering pump was calibrated to deliver this flow rate. The liquid is appropriately sprayed onto the mixing solids in the continuous blender.

A second liquid stream of water alone was also sprayed onto the mixing solids in the continuous blender. This stream was used to control the consistency of the wet solids which were charged to the extruder. Its rate was adjusted as needed.

### Extrusion and drying

The solids wetted with active ingredient and water were fed to a Luwa basket type extruder*) of appropriate size. The product was extruded with a 1.5 mm die. The extrudate was discharged to a stainless steel fluid bed dryer where the water content was reduced to below 2 wt%. Drying air temperatures up to 75°C were employed without damage to the product.

### Screening

A vibratory screen apparatus equipped with 8 and 30 mesh US Sieve screens to separate oversize and fines from the product were used. The +8 mesh oversize fraction was extreme small and was reworked into the system manually. The -30 mesh fines ranged from 2 to 8 wt% of the dryer discharge. These may be added to dry solids blender (along with any recycled dust). An adjustment in the water rate may be needed, which is why the semi-continuous process is preferred.
*) = LCI basket type extruder: very low pressure extruder; wet powder is fed to the top of the extruder and a blade wipes it through a screen; extrudate, wet noodles, are collected and later dried.

### Hygroscopicity tests

Hygroscopicity tests were conducted which showed that the product absorbed water at a rate dependent upon the relative humidity. At 76% relative humidity, the product gained only 5 wt% after 2 hours' exposure and completely maintained its granular structure.

### Particle size determination

The method of evaluating performance of the formulation was to determine the medium dispersed particle size (diameter). A Cilas Granulometre Model 715 was used. A sample was added to water, which is stirring at about 50% power. After about five minutes, the median particle size was determined. The sample was then sonicated for thirty seconds and another median particle size was determined. Sonication or use of sonic energy provides very significant agitation.

The most preferred formulations include the ones with substantially the same median dispersed particle size values for both pre- and post-sonication.

All of the following formulations were tested according to the above procedure.

**Table 1**

| Formulation No. | 1c⁺ | 2c | 3c | 4c | 5c |
|---|---|---|---|---|---|
| Mepiquat Chloride*⁾ (600g/4g) | 34.5 | 35.2 | 35.2 | 35.5 | 35.4 |
| Mepwet® EFW | 3.0 | 2.0 | 3.0 | 3.0 | 3.0 |
| Morwet® D-425 | 9.8 | 10.0 | 5.0 | 10.0 | 5.0 |
| Reax® 45DTC | - | - | - | - | - |
| PVP | - | 2.0 | - | - | 1.0 |
| Sipernat® 50 S ¹) | 28.5 | 29.3 | 29.3 | - | - |
| Micro-Cel® E | - | - | - | 29.0 | 29.2 |
| Barden® Fine Clay | 22.6 | 20.0 | 27.5 | 21.0 | 24.9 |
| ASP-NC ²) | - | - | - | - | - |
| Residual Water | 1.5 | 1.5 | 1.5 | 1.5 | 1.5 |

| Median particle sizes in microns | | | | | |
|---|---|---|---|---|---|
| Fresh Samples: | | | | | |
| No Sonics | 86 | 56 | 46 | 34 | 27 |
| Sonics | 11 | 10 | 9 | 15 | 16 |

| Long term storage stability | | | | | |
|---|---|---|---|---|---|
| 6 Mo, 40°C, in 8030 PVA: | | | | | |
| No Sonics | | | | | 74 |
| Sonics | | | | | 17 |

| 1 Yr, 25°C, in HDPE Bottle: | | | | | |
|---|---|---|---|---|---|
| No Sonics | | | | | 51 |
| Sonics | | | | | 16 |

| | | | | | |
|---|---|---|---|---|---|
| ⁺⁾c= Comparative Example | | | | | |
| ^{*)} technical grade | | | | | |
| ¹⁾ a finely milled, precipitated, synthetic amorphous silicon dioxide hydrate (Chemical Abstracts no. 112926-00-8) | | | | | |
| ²⁾ delaminated kaolin clay (Chemical Abstracts no. 1332-58-7) | | | | | |

**Table 2**

| Formulation No. | 6c | 7c | 8 | 9c | 10 | 11 | 12 |
|---|---|---|---|---|---|---|---|
| Mepiquat Chloride *⁾ | 35.2 | 35.2 | 35.2 | 35.2 | 35.2 | 35.2 | 35.2 |
| Morwet® EFW | 3.0 | 3.0 | 3.0 | 3.0 | 3.0 | 3.0 | 3.0 |
| Morwet® D-425 | - | 5.0 | 5.0 | 5.0 | - | 5.0 | - |
| Reax® 45DTC | 5.0 | - | - | - | 5.0 | - | 5.0 |
| PVP | 1.0 | 1.0 | 1.0 | 1.0 | 1.0 | 1.0 | 1.0 |
| Sipernat® 50 S | - | - | - | - | - | - | - |
| Micro-Cel® E | 29.3 | 29.3 | 29.3 | 29.3 | 29.3 | 22.3 | 22.3 |
| Barden® Fine Clay | 25.0 | 25.0 | - | 25.0 | - | - | - |
| ASP-NC | - | - | 25.0 | - | 25.0 | 32.0 | 32.0 |
| Residual Water | 1.5 | 1.5 | 1.5 | 1.5 | 1.5 | 1.5 | 1.5 |

| Median particle sizes in microns | | | | | | | |
|---|---|---|---|---|---|---|---|
| Fresh Samples : | | | | | | | |
| No Sonics | 19 | 24 | 20 | 33 | 23 | 18 | 16 |
| Sonics | 17 | 16 | 17 | 16 | 16 | 15 | 16 |

| Long term storage stability | | | | | | | |
|---|---|---|---|---|---|---|---|
| 1 Mo, 50°C, in 8030 PVA Film | | | | | | | |
| No Sonics | | | | 58 | 27 | 24 | 18 |
| Sonics | | | | 15 | 17 | 15 | 16 |

| 1 Mo, 50°C, in KB PVA Film | | | | | | | |
|---|---|---|---|---|---|---|---|
| No Sonics | | | | 51 | | 25 | 17 |
| Sonics | | | | 16 | | 15 | 16 |

| | | | | | | | |
|---|---|---|---|---|---|---|---|
| *⁾ technical grade | | | | | | | |

The following examples used the methods described in the above examples but used salts of water soluble pesticides. As can be seen from the sonic testing, the pesticidal formulations generated active products.

### Example 2: Acifluorfen WG

| | |
|---|---|
| Acifluorfen (34.5 g/kg) | 34.6% |
| Micro-Cel® E | 25.6% |
| Morwet® EFW | 3.2% |
| Morwet® D-425 | 5.3% |
| Agrimer ATF | 1.0% |
| Sodium Citrate | 14.8% |
| Englehard ASP-NC | 14.1% |
| Residual Water | 1.5% |
| No Sonics - 20 micron median particle size Sonics - 17 micron median pariticle size | |

## Claims

1. A pesticidal formulation in the form of water-dispersible granules comprising:
a) a solid material consisting essentially of
i) a filler/binder which is a delaminated kaolin clay,
ii) a synthetic calcium silicate carrier, optionally together with other solid carriers, and
iii) a dispersing agent; and
b) a pesticidally effective amount of a salt of a water soluble or hygroscopic pesticide adsorbed onto said synthetic calcium silicate carrier.

2. A pesticidal formulation as in claim 1, wherein said dispersing agent is a lignosulfonic acid or a condensed sulfonated sodium salt.

3. A pesticidal formulation as in claims 1 or 2, wherein said dispersing agent is a mixture of one of said lignosulfonic acid or a condensed sulfonated sodium salt with polyvinylpyrrolidone.

4. The formulation of claims 1 to 3, wherein said pesticide is a plant growth regulator.

5. The formulation of claim 4, wherein said plant growth regulator is 1,1-dimethylpiperidinium chloride.

6. The formulation of claim 1 to 3, wherein said pesticide is a herbicide.

7. The formulation of claim 6, wherein said herbicide is sodium bentazon.

8. A method of making a pesticidal formulation as claimed in claim 1, comprising:
(a) absorbing a pesticidally effective amount of a salt of a water soluble or hygroscopic pesticide onto a synthetic calcium silicate carrier and adding
(i) a filler/binder which is a delaminated kaolin clay; and
(ii) a dispersing agent; and
(b) granulating the pesticide-containing solid material obtained according to step (a); and
(c) drying the granular pesticidal formulation obtained according to step (b); and
(d) sizing the dried granular pesticidal formulation obtained according to step (c) to remove fines.

## Patentansprüche

1. Pestizidformulierung in der Form eines in Wasser dispergierbaren Granulats aus:
a) einem im wesentlichen aus
i) einem Füllstoff/Bindemittel, bei dem es sich um einen aufgeblätterten Kaolinton handelt,
ii) einem synthetischen Calciumsilikat-Trägerstoff, gegebenenfalls gemeinsam mit anderen festen Trägerstoffen, und
iii) einem Dispergiermittel bestehenden Feststoff sowie
b) einer pestizidwirksamen Menge eines Salzes eines auf diesen synthetischen Calciumsilikat-Trägerstoff adsorbierten wasserlöslichen oder hygroskopischen Pestizids.

2. Pestizidformulierung nach Anspruch 1, bei der es sich bei dem Dispergiermittel um eine Ligninsulfonsäure oder ein kondensiertes sulfoniertes Natriumsalz handelt.

3. Pestizidformulierung nach Anspruch 1 oder 2, bei der es sich bei dem Dispergiermittel um eine Mischung aus entweder dieser Ligninsulfonsäure oder einem kondensierten sulfonierten Natriumsalz und Polyvinylpyrrolidon handelt.

4. Formulierung nach den Ansprüchen 1 bis 3, bei der es sich bei dem Pestizid um einen Pflanzenwachstumsregulator handelt.

5. Formulierung nach Anspruch 4, bei der es sich bei dem Pflanzenwachstumsregulator um 1,1-Dimethylpiperidiniumchlorid handelt.

6. Formulierung nach den Ansprüchen 1 bis 3, bei der es sich bei dem Pestizid um ein Herbizid handelt.

7. Formulierung nach Anspruch 6, bei der es sich bei dem Herbizid um Natrium-Bentazon handelt.

8. Verfahren zur Herstellung einer Pestizidformulierung nach Anspruch 1 mit den folgenden Schritten:
(a) Absorbieren einer pestizidwirksamen Menge eines Salzes eines wasserlöslichen oder hygroskopischen Pestizids auf einen synthetischen Calciumsilikat-Trägerstoff und Zugabe
(i) eines Füllstoffs/Bindemittels, bei dem es sich um einen aufgeblätterten Kaolinton handelt, sowie
(ii) eines Dispergiermittels; sowie
(b) Granulieren des nach Schritt (a) erhaltenen pestizidhaltigen Feststoffs;
(c) Trocknen der nach Schritt (b) erhaltenen granulären Pestizidformulierung; sowie
(d) Sichten der nach Schritt (c) erhaltenen granulären Pestizidformulierung zur Entfernung des Siebfeinen.

## Revendications

1. Composition parasiticide sous la forme de granules dispersables dans l'eau, qui comprend :
a) une matière solide consistant essentiellement en
i) un liant/matière de charge, consistant lui-même en une argile du type kaolin délaminée,
ii) un véhicule consistant en un silicate de calcium synthétique, accompagné éventuellement d'autres véhicules solides et
iii) un agent dispersant ; et
b) une quantité parasiticide efficace d'un sel d'une substance parasiticide soluble dans l'eau ou hygroscopique, adsorbée sur le véhicule consistant en un silicate de calcium synthétique.

2. Composition parasiticide selon la revendication 1, dans laquelle l'agent dispersant consiste en un acide lignolsulfonique ou en un sel de sodium d'un condensat sulfoné.

3. Composition parasiticide selon la revendication 1 ou 2, dans laquelle l'agent dispersant consiste en un mélange de l'acide lignolsulfonique ou d'un sel de sodium d'un condensat sulfoné avec de la polyvinylpyrrolidone.

4. Composition selon les revendications 1 à 3, dans laquelle le produit parasiticide est un régulateur de la croissance des végétaux.

5. Composition selon la revendication 4, dans laquelle le régulateur de croissance des végétaux est du chlorure de 1,1 -diméthylpipéridinium.

6. Composition selon les revendications 1 à 3 dans laquelle le parasiticide est un herbicide.

7. Composition selon la revendication 6, dans laquelle l'herbicide est le sodium bentazon.

8. Procédé pour préparer une composition parasiticide selon la revendication 1, qui comprend
a) l'absorption d'une quantité parasiticide efficace d'un sel d'un parasiticide soluble dans l'eau ou hygroscopique par un véhicule consistant en un silice de calcium synthétique et l'addition
(i) d'un liant/matière de charge consistant en une argile du type kaolin délaminée; et
(ii) d'un agent dispersant ; et
(b) la granulation de la matière solide contenant le parasiticide obtenue en (a) ; et
(c) le séchage de la composition parasiticide granulaire obtenue en (b) ; et
(d) le tamisage de la composition parasiticide granulaire séchée obtenue en (c) pour élimination des fines.
